# EUROPÄISCHE PATENTANMELDUNG

(11) **EP 2 438 811 A2**
(43) Veröffentlichungstag der Anmeldung: **11.04.2012**
(21) Anmeldenummer: 11184189.6
(22) Anmeldetag: 06.10.2011
(51) Int. Cl.: A01K 27/00

(54) **Leuchthalsband für Säugetiere, insbesondere Hunde**

(30) Priorität: 08.10.2010 DE 202010014013 U
(71) Anmelder: Wolters Cat & Dog GmbH, 27321 Thedinghausen (DE)
(72) Erfinder: Wolters, Frank, 27801 Dötlingen (DE)
(74) Vertreter: Eisenführ, Speiser & Partner

(57) **Zusammenfassung**

Die Erfindung betrifft ein Leuchthalsband (1) für Säugetiere, insbesondere Hunde, mit einem transparenten und flexiblen Band (2) zum Anlegen um einen Halsbereich, einer Beleuchtungsvorrichtung zum Beleuchten des Bandes, enthaltend mindestens einen Leuchtkörper und einem Gehäuse mit zwei Verbindungsabschnitten zum Verbinden der Enden des Bandes mit dem Gehäuse. Erfindungsgemäß ist der Leuchtkörper so relativ zu einem Ende des Bandes angeordnet ist, dass das abgegebene Licht in das Band einleitbar ist.

## Beschreibung

Die Erfindung betrifft ein Leuchthalsband für Säugetiere, insbesondere Hunde, nach dem Oberbegriff des Anspruchs 1.

Leuchthalsbänder dienen zum Kenntlichmachen von Haustieren, insbesondere Hunde, in der Dunkelheit. Hierzu werden Leuchthalsbänder als eine Art von Warnlicht zusätzlich zum Leinenhalsband am Hals des Hundes angelegt, um den Hund in der Dunkelheit kenntlich zu machen und dadurch Zusammenstöße oder dergleichen mit anderen Verkehrsteilnehmern zu vermeiden. Der Hundehalter kann ferner sehen, wo sein Tier sich befindet.

Bekannt ist ein handelsübliches Leuchthalsband der Firma Leuchtie mit einem transparenten Schlauch in kreisrunder Form, der im Inneren mit Leuchtkörpern versehen ist. Dieses Leuchthalsband weist eine Vielzahl von mit einer Batterie betriebenen Leuchtkörpern auf, um das Leuchthalsband entlang der gesamten Länge des Bandes auszuleuchten. Folglich ist der Stromverbrauch ist relativ hoch. Daher müssen große Batterien eingesetzt werden, um einen häufigen Batteriewechsel zu vermeiden. Aufgrund des Gewichts der Batterie und des dadurch eingeschränkten Tragekomforts ist das jedoch nicht gewünscht. Die Anbringung der Leuchtkörper innerhalb des Schlauches erfordert desweiteren einen großen Schlauchdurchmesser, wodurch der Tragekomfort auch eingeschränkt wird. Ferner trägt auch die kreisrunde Form des Leuchthalsbandes zur Verschlechterung des Tragekomforts bei, da es beispielsweise beim Absenken des Kopfes durch die Schwerkraft vom Hals abrutschen kann.

Aufgabe der Erfindung ist es daher ein Leuchthalsband aufzuzeigen, das eine gute Ausleuchtung des Halsbandes bei einem geringen Stromverbrauch aufweist und zugleich einen erhöhten Tragekomfort erlaubt.

Die Aufgabe wird gelöst durch ein Leuchthalsband der eingangs genannten Art mit einem Leuchtkörper, der so relativ zu einem Ende des Bandes angeordnet ist, dass das abgegebene Licht in das Band einleitbar ist.

Mittels dieser erfindungsgemäßen und vorteilhaften Ausführungsform des Leuchthalsbandes ist eine gleichmäßige Ausleuchtung des Bandes anhand eines Leuchtkörpers möglich, wodurch das Gewicht und der Stromverbrauch im Vergleich zum Stand der Technik wesentlich geringer ist, indem das Band als ein Lichtleiter fungiert. Der Leuchtkörper strahlt das Band an einem Ende an bzw. in dieses hinein und leitet damit das Licht in das Band ein, das anschließend über die gesamte Länge des Bandes weitergeleitet wird. Über die Länge des Bandes verteilt, wird ein Teil des Lichts an der Oberfläche des Bandes gebrochen, so dass das Band - nach aussen - leuchtet. Der Lichtübergang an den Oberflächen erfolgt nach dem Snelliusschen Brechungsgesetz. Demnach treten nur diejenigen Lichtstrahlen aus dem Band heraus, die in einem Winkel auf die Oberfläche treffen, der größer ist als der Grenzwinkel.

Der Brechungsindex des Bandes liegt im Bereich von 1,2 bis 2, vorzugsweise im Bereich von 1,5 bis 2 und besonders bevorzugt im Bereich von 1,75 bis 2. Im nicht leuchtenden Zustand ist das Band damit transparent.

Desweiteren weist das Band vorzugsweise eine ebene Fläche senkrecht zur Haupterstreckungsrichtung auf, um eine effiziente Lichteinleitung zu ermöglichen. Das Ende des Bandes kann mittels eines Messers, einer Schere oder dgl. einfach abgeschnitten werden, um ein flaches Ende herzustellen und dessen Länge zu verändern. Dies ist ohne weiteres möglich, da das Band aus einem biegbaren bzw. flexiblen Material hergestellt ist und sich innerhalb des Bandes keine Elektronik der Beleuchtungsvorrichtung befindet.

Zum Schließen des Bandes zu einem Halsband weist das Leuchthalsband das Gehäuse mit mindestens zwei Verbindungsabschnitten auf, die jeweils mit einem Ende des Bandes verbunden werden, um das Halsband zu schließen. Die Verbindung zwischen dem Gehäuse und dem Halsband ist reversibel lösbar, so dass das Halsband ohne weiteres gekürzt oder ausgetauscht werden kann.

Eine vorteilhafte Ausführungsform des erfindungsgemäßen Leuchthalsbandes ist dadurch gekennzeichnet, dass der Leuchtkörper außerhalb des Bandes angeordnet ist. Das Band und der Leuchtkörper sind auf diese Weise vollständig unabhängig voneinander angeordnet. Das Band ist demnach besonders einfach aus dem Verbindungsabschnitt lösbar und wieder mit diesem verbindbar, um beispielsweise die Länge des Bandes anzupassen. Eine Verbindung zwischen dem Band und dem Leuchtkörper muss beim Wiederverbinden des Bandes nicht hergestellt werden.

Gemäß einer weiteren vorteilhaften Ausführungsform der Erfindung weist das Band Lichtstreuungsabschnitte auf. Die Lichtstreuungsabschnitte bieten Brechungsflächen für das Licht und bringen das Band an gezielten Stellen zum Leuchten. Mittels dieser Ausführungsform ist eine besonders gute Ausleuchtung des Bandes möglich.

Besonders vorteilhaft ist eine erfindungsgemäße Ausführungsform des Leuchthalsbandes mit Lichtstreuungsabschnitten, die an einer inneren Oberfläche des Bandes und / oder innerhalb des Bandes angeordnet sind. Die Lichtstreuungsabschnitte sind auf diese Weise von der Umgebung abgeschirmt. Die Außenfläche des Bandes stellt eine Schutzhülle der Lichtstreuungsabschnitte dar. Somit sind die Lichtstreuungsabschnitte geschützt gegen Schmutz, Kratzern oder dgl.

Vorteilhaft ist eine weitere Ausführungsform der Erfindung, bei der Lichtstreuungsabschnitte in Form von Nuten ausgebildet sind. Die Nuten haben einen definierten geometrischen Querschnitt an der besonders vorteilhafte Lichtbrechungen erzielbar sind. Anhand der Querschnittsform lassen sich Brechungseffekte, wie z. B. hellere Lichtpunkte, gleichmäßige Ausleuchtung, etc. erzielen, die eine Vielzahl von Gestaltungmöglichkeiten der Beleuchtung des Leuchthalsbandes ermöglichen.

Eine weitere vorteilhafte Ausführungsform des erfindungsgemäßen Leuchthalsbandes ist dadurch gekennzeichnet, dass das Band schlauchförmig ausgebildet und mit einer Nut versehen ist, die gewindeförmig, um das Band verläuft. Diese Ausführungsform erlaubt eine besonders gute Ausleuchtung des Bandes da sich das eingeleitete Licht entlang der gewindeförmigen Nut besonders gut bricht. Es ergibt sich daraus eine gleichmäßige Beleuchtung des Halsbandes, das die Sichtbarkeit des Hundes erhöht.

Vorteilhaft ist auch eine Ausführungsform des erfindungsgemäßen Leuchthalsbandes mit einem Band, das aus einem transparenten Kern und Mantel zusammengesetzt ist, wobei der Brechungsindex des Kerns höher ist als die des Mantels. Mittels dieser Ausführungsform sind vielfältige Variationen von Lichtmustern erzielbar, bei der das Band zumindest abschnittsweise lichtundurchlässig gestaltet wird. Es könnten somit gestreifte oder ähnliche Lichtmuster erzeugt werden.

Ein vorteilhafter zweiter Aspekt der Erfindung der eingangs genannten Art oder nach einem der genannten Ausführungsformen weist Längsachsen der Verbindungsabschnitte auf, die angewinkelt zueinander angeordnet sind. Gemäß dieser Ausführungsform ist das Leuchthalsband in einer tropfenförmigen Form ausgebildet, die ein Abrutschen des Halsbandes verhindert. Die angewinkelte Anordnung der Verbindungsabschnitte sorgt dafür, dass das Leuchthalsband zu den Verbindungsabschnitten hin schmaler wird, woraus sich die tropfenartige Form des Leuchthalsbands ergibt. Im angelegten Zustand ist die schmale Seite nach unten ausgerichtet und bleibt an der Schnauze des Tieres hängen, wenn der obere Teil des Bandes zu rutschen anfängt.

Besonders bevorzugt ist eine Ausführungsform des erfindungsgemäßen Halsbandes, dessen Längsachsen der Verbindungsabschnitte in einem Winkel von kleiner als 180°, vorzugsweise im Bereich von 70° bis 130° und besonders bevorzugt im Bereich von 90°±10° angeordnet sind. Diese Ausführungsform der Erfindung erlaubt eine Form des Leuchthalsbandes, das besonders einfach am Tier anlegbar ist und zugleich das Abrutschen des Leuchthalsbandes sicher verhindert.

Ein weiterer Aspekt des erfindungsgemäßen Leuchthalsbandes der eingangs genannten Art oder nach einem der genannten Ausführungsformen ist dadurch gekennzeichnet, dass das Gehäuse und jede Verbindung zwischen dem Verbindungsabschnitt und dem Band wasserdicht ausgebildet ist. Das Leuchthalsband ist sowohl spritzwasserdicht als auch bis zu einer Wassertiefe von mehreren Metern. Eine Prüfung der Wasserdichtheit hat ergeben, dass das Gehäuse und die Verbindungen auch nach mehreren Stunden unter Wasser dicht bleiben.

Mittels einer weiteren vorteilhaften Ausführungsform der Erfindung, bei dem das Ende des Bandes innerhalb des Verbindungsabschnittes einspannbar ist, wird die Wasserdichtheit der Verbindung zwischen dem Verbindungsabschnitt und dem Band besonders einfach erreicht. Nach dieser Ausführungsform ist das Band innerhalb des Verbindungsabschnittes eingespannt bzw. eingequetscht, so dass die Kontaktflächen zwischen dem Band und dem Verbindungsabschnitt wasserdicht sind.

Eine vorteilhafte Ausführungsform weist Verbindungsabschnitte mit einem Durchgang auf, in welches das Band eingefügt ist, wobei der Durchgang zumindest abschnittsweise verjüngt ausgebildet ist, um das Band im Bereich des verjüngten Abschnitts zu verspannen. Fernerweisen die Verbindungsabschnitte an ihrer Außenfläche ein Gewinde auf, auf die jeweils eine Verschlusskappe zum zusätzlichen Verspannen des Bandes aufschraubbar ist. Diese Ausführungsform ermöglicht eine Sicherstellung der Wasserdichtheit. Insbesondere wird die Wasserdichtheit auch beim mehrmaligen Lösen und Wiederherstellen der Verbindung zwischen Band und Verbindungsabschnitt einfach wieder hergestellt. Eine unbeabsichtigte Beschädigung der Wasserdichtheit seitens des Anwenders wird hierdurch entgegengewirkt.

Vorteilhaft ist eine weitere Ausführungsform des erfindungsgemäßen Leuchthalsbandes, bei dem der Durchgang einen Anschlag aufweist, der mit dem Ende des Bandes zusammenwirkt, um das Einfügen des Bandes zu begrenzen. Der Anschlag ist in Form eines Vorsprungs oder eines Absatzes ausgebildet und sorgt dafür, dass das Band nur bis zu dem Anschlag in den Verbindungsabschnitt eindringt. Die Position des Anschlags definiert die einzufügende Länge des Bandes in den Verbindungsabschnitt.

Besonders vorteilhaft ist eine Ausführungsform des erfindungsgemäßen Leuchthalsbandes mit einem Gehäuse, das mehrere Gehäuseabschnitte aufweist, die miteinander verklebt oder verschweißt, insbesondere ultraschallverschweißt, sind. Das Gehäuse ist an den angrenzenden Stellen zweier Gehäuseabschnitte miteinander verschweißt oder verklebt, so dass kein Spalt an den angrenzenden Stellen übrig bleibt. Das Gehäuse ist somit wasserdicht.

Desweiteren ist ein erfindungsgemäßes Leuchthalsband nach einer Ausführungsform vorteilhaft, bei dem das Gehäuse in einer Ansicht im Wesentlichen Y-förmig gestaltet ist, die Verbindungsabschnitte winklig von einem Grundkörper des Gehäuses abstehen und der Grundkörper einen Hohlraum aufweist. Die Verbindungsabschnitte sind symmetrisch zum Grundkörper des Gehäuses angewinkelt angeordnet, so dass das Leuchthalsband eine symmetrische Form aufweist.

Nach einer vorteilhaften Ausführungsform des Leuchthalsbandes ist der Leuchtkörper und eine elektrische Stromversorgungseinrichtung zumindest teilweise innerhalb des Hohlraums des Grundkörpers angeordnet. Der Schwerpunkt des Leuchthalsbandes verschiebt sich dadurch in vorteilhafter Weise zum Gehäuse hin.

Eine weitere vorteilhafte Ausführungsform des erfindungsgemäßen Leuchthalsbandes weist einen Leuchtkörper auf, der aus einer Leuchtdiode ausgebildet ist, die im Wesentlichen im Durchgang des Verbindungsabschnitts angeordnet ist. Die Leuchtdiode ist koaxial zum Durchgang und dicht am Endstück des Bandes angeordnet, so dass eine besonders vorteilhafte Einleitung des Lichts möglich ist.

Ferner weist ein erfindungsgemäßes Leuchthalsband nach einer vorteilhaften Ausführungsform im Bereich des Grundkörpers einen elastisch verformbaren Bereich auf. Dieser Bereich eignet sich somit zum Betätigen einer darunter angeordneten Elektronik, wie beispielsweise einen Schalter für die Leuchtdioden.

Eine vorteilhafte Ausführungsform der Erfindung zeigt ein Gehäuse mit einer mittels eines Deckels verschließbaren und abdichtbaren Zugangsöffnung für die elektrische Stromversorgungseinrichtung. Diese Ausführungsform ermöglicht einen einfachen Austausch der Stromversorgungseinrichtung, z. B. in Form einer oder mehrerer Knopfzellen, die ohne besondere Werkzeuge oder Kenntnisse durchführbar sind.

Vorteilhaft ist eine weitere Ausführungsform der Erfindung bei dem das Band aus einem thermoplastischen Elastomer, insbesondere thermoplastisches Urethan, hergestellt ist. Das Band aus diesem Material erlaubt eine gute Verformbarkeit des Bandes zum dichten Verspannen.

Ferner ist eine Ausführungsform des Leuchthalsbandes vorteilhaft, bei dem das Gehäuse aus einem Material aus der Gruppe enthaltend Acrylnitril-Butadien-Styrole hergestellt ist. Dieses Material ist in Kombination mit einem elastischen Band besonders vorteilhaft zum Erreichen wasserdichter Kontaktflächen.

Die Erfindung wird anhand eines Ausführungsbeispiels mit Figuren näher beschreiben. Es zeigen:
- Figur 1: eine Draufsicht eines Leuchthalsbandes des Ausführungsbeispiels,
- Figur 2: eine Draufsicht auf die Innenseite eines vorderen Gehäuseabschnitts des Leuchthalsbandes,
- Figur 3: eine Draufsicht auf eine Beleuchtungsvorrichtung des Leuchthalsbandes,

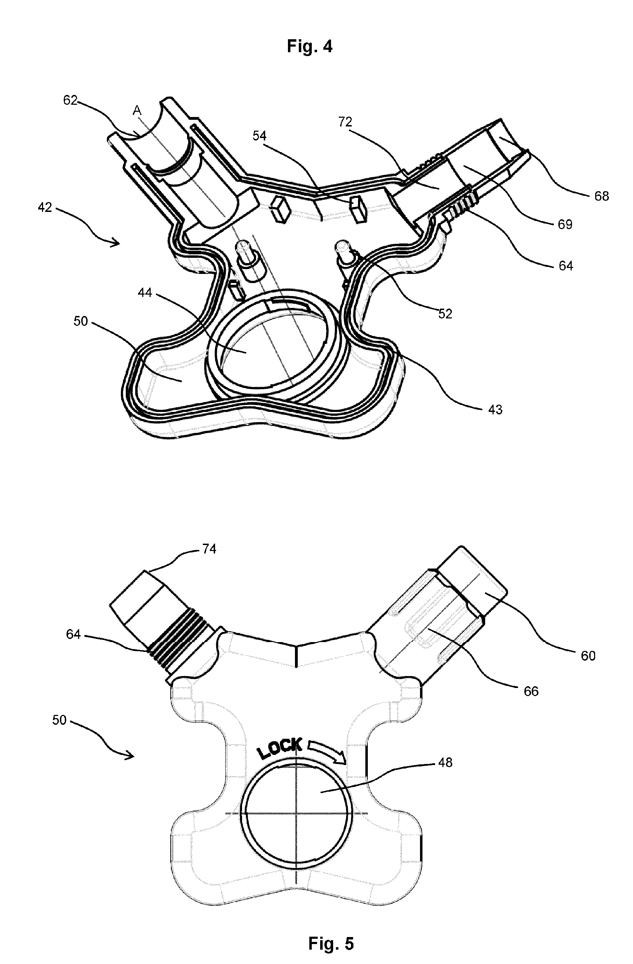

- Figur 4: eine perspektivische Ansicht auf die Innenseite eines hinteren Gehäuseabschnitts des Leuchthalsbandes,
- Figur 5: eine Draufsicht auf die Außenseite des hinteren Gehäuseabschnitts,

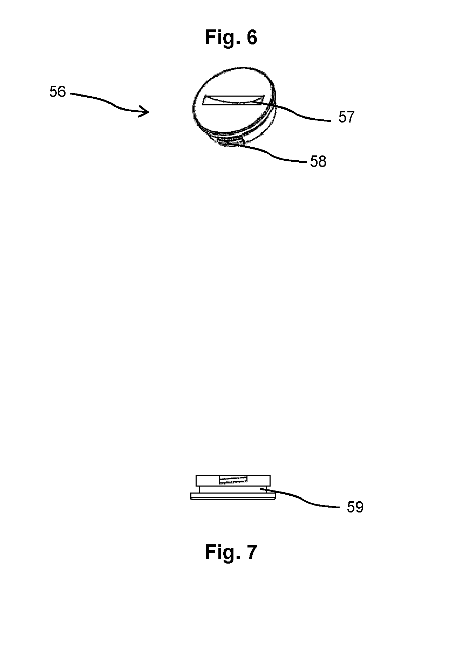

- Figur 6: eine perspektivische Ansicht auf ein Deckel für eine Zugangsöffnung des hinteren Gehäuseabschnitts, und
- Figur 7: eine Seitenansicht des Deckels.

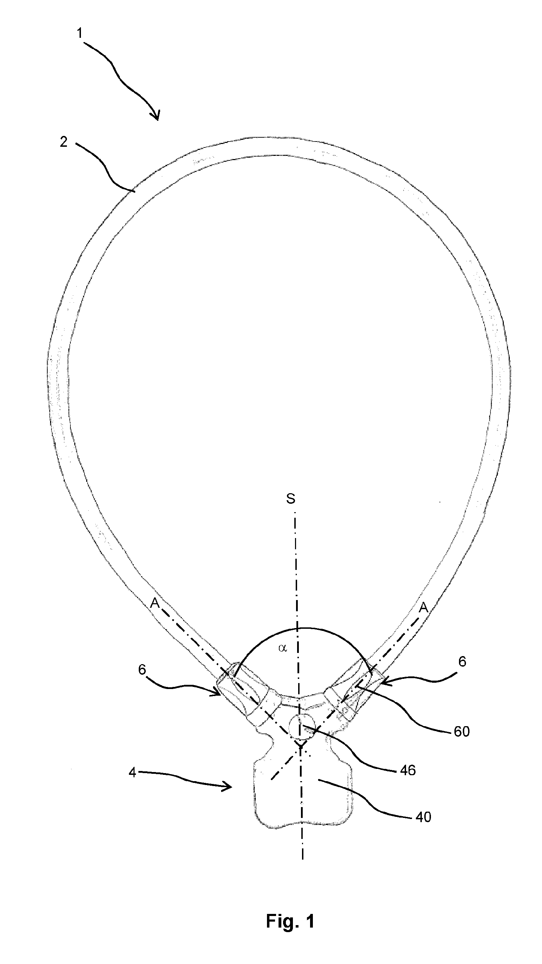

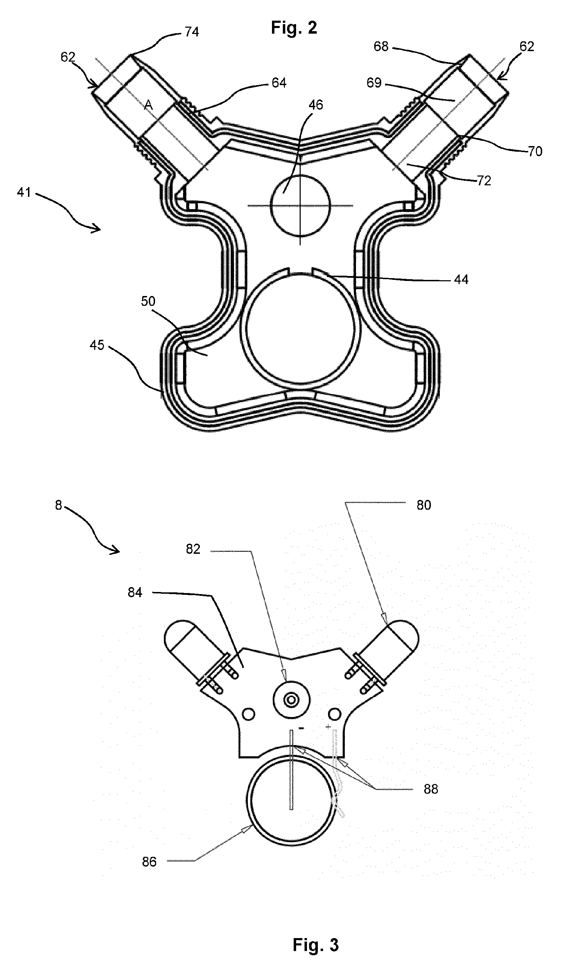

Figur 1 zeigt ein Leuchthalsband 1 für Hunde mit einem transparenten und flexiblen Band 2 zum Anlegen um einen Halsbereich, ein Gehäuse 4 mit zwei Verbindungsabschnitten 6 zum Verbinden der Enden des Bandes 2 mit dem Gehäuse 4. Auf die Verbindungsabschnitte 6 sind Verschlusskappen 60 aufgeschraubt. Innerhalb des Gehäuses 4 befindet sich eine Beleuchtungsvorrichtung 8, wie in Figur 3 gezeigt, zum Beleuchten des Bandes 2. Die Beleuchtungsvorrichtung 8 enthält zwei Leuchtkörper in Form von Leuchtdioden 80.

Das Band 2 ist schlauchförmig ausgebildet, wobei an der inneren Oberfläche des Bandes Lichtstreuungsabschnitte in Form von gewindeförmig verlaufenden Nuten vorgesehen sind. Diese sind nicht in den Figuren dargestellt. Die Nuten haben vorzugsweise einen gleichschenkligen dreieckigen Querschnitt und sorgen für eine gleichmäßige Ausleuchtung des Bandes. Die Enden des Bandes 2 sind flach abgeschnitten, so dass eine senkrechte Fläche zur Haupterstreckungsrichtung zum Einleiten des Lichtes zur Verfügung steht. Hierzu ist jeweils eine Leuchtdiode 80 am Ende gegenüber der Fläche angeordnet. Das Band 2 ist aus einem transparenten und flexiblen Material ausgebildet und ist leicht biegbar. Die Enden des Bandes 2 sind mit den Verbindungsabschnitten 6 des Gehäuses verbunden.

Das Gehäuse 4 ist in der Ansicht aus Figur 1 im Wesentlichen Y-förmig gestaltet. Es weist zwei Verbindungsabschnitte 6 auf, die symmetrisch zur Achse S eines Grundkörpers 40 des Gehäuses 4 angeordnet sind. Zwischen den Verbindungsabschnitten 6 befindet sich der Grundkörper 40 mit einem Hohlraum. Das Gehäuse 4 weist einen vorderen und einen hinteren Gehäuseabschnitt 41, 42 auf. Am vorderen Gehäuseabschnitt 41 ist ein dünnwandiger Vorsprung 45 entlang der Gehäusewand angeordnet, der in eine dazugehörige Nut 43 innerhalb der Wand des hinteren Gehäuseabschnitts 42 eingreift und eine formschlüssige Verbindung zwischen beiden Gehäuseabschnitten 41, 42 herstellt. Zur Endmontage werden die Gehäuseabschnitte 41, 42 mittels der Ultraschallschweißtechnik wasserdicht verschweißt. Die Gehäuseabschnitte 41, 42 sind aus einem ABS-Kunststoff in einem Spritzgussverfahren hergestellt.

Die Verbindungsabschnitte 6 sind röhrenförmig ausgebildet und zueinander angewinkelt. Sie bilden an einem Innenabschnitt des Leuchthalsbandes einen V-förmigen Abschnitt des Gehäuses. Die Längsachsen A der Verbindungsabschnitte 6 sind in diesem Ausführungsbeispiel in einem Winkel α=90° oder ungefähr α=90° ausgerichtet. Denkbar sind auch Ausführungsbeispiele mit einem Winkel von < als 180°, vorzugsweise zwischen 70° bis 130° und besonders bevorzugt im Bereich von 90° +/- 10°.

Im Inneren der Verbindungsabschnitte 6 befindet sich jeweils ein Durchgang 62, in welches ein Ende des Bandes 2 eingefügt wird. Der Durchgang 62 hat mehrere Abschnitte, von denen ein Erster 68 in Richtung zum Gehäuse hin verjüngt ausgebildet 68 ist. Der verjüngte Abschnitt 68 wirkt mit dem Band 2 so zusammen, dass das Band 2 beim Einfügen in den Durchgang verspannt bzw. gequetscht wird und die Kontaktflächen wasserdicht sind. Ferner weist der Durchgang einen Anschlag 70 im zweiten Abschnitt 69 auf, der mit dem Ende des Bandes zusammenwirkt, um das Einfügen des Bandes zu begrenzen. Der Anschlag 70 ist in Form eines Vorsprungs im Durchgang ausgebildet und sorgt dafür, dass das Band nicht tiefer als bis zum Anschlag 70 in den Verbindungsabschnitt eindringen kann. Ein Dritter Abschnitt 72 ist zum Aufnehmen der Leuchtdiode 80 vorgesehen. An der Außenfläche der Verbindungsabschnitte 6 ist ein Gewinde 64 angebracht, auf das jeweils eine Verschlusskappe 60 aufschraubbar ist. Zum vereinfachten Aufschrauben der Verschlusskappe 60 weist der Verbindungsabschnitt 6 einen sich konisch verjüngenden Endabschnitt 74 auf.

Die Verschlusskappe 60 weist auch einen Durchgang zum Durchführen des Bandes 2 auf. Der Durchmesser des Durchgangs ist so dimensioniert, dass eine Presspassung zwischen der Außenfläche des Verbindungsabschnitts 6 und der Innenfläche des Durchgangs zustande kommt. Im aufgeschraubten Zustand drückt die Verschlusskappe 60 die Wand des Verbindungsabchnitts 6 gegen das Band 2, so dass das Band 2 innerhalb des Verbindungsabschnitts 6 verspannt wird. Die Verspannung führt zu einer wasserdichten und festen anliegenden Verbindung zwischen dem Verbindungsabschnitt 6 und dem Band 2. An der Außenseite hat die Verschlussklappe 60 ein Griffprofil, das die Kraftübertragung auf die Verschlusskappe 60 beim Verschrauben verbessert.

Der Grundkörper 40 des Gehäuses 4 weist eine im Wesentlichen rechteckige Grundform auf. An zwei gegenüberliegenden Seitenflächen des Grundkörpers 40 sind jeweils Aussparungen ausgebildet, die eine Grifffläche zum Greifen des Grundkörpers 40 bieten. An der Außenseite vorderen Gehäuseabschnitts 41 ist im Bereich des Grundkörpers 40 ein elastisch verformbarer Bereich 46 zu sehen, der mit bloßem Fingerdruck verformbar ist. In diesem Ausführungsbeispiel weist der Grundkörper 40 eine Aussparung in diesem Bereich auf, die mit einer Gummischeibe 46 ausgefüllt wird. Die Verbindung zwischen der Gummischeibe und dem Grundkörper 40 ist wasserdicht ausgebildet. Die Gummischeibe 46 ist an der Stelle angeordnet, an der sich auch ein Schalter 82 der Beleuchtungsvorrichtung 8 befindet.

Ferner befinden sich an den Innenseiten des Grundkörpers Positionierelemente 52, 54 für eine Stromversorgungseinrichtung der Beleuchtungsvorrichtung 8 in Form einer Knopfzelle 86. Auf der Außenseite des hinteren Gehäuseabschnitts 42 befindet sich eine mittels eines Deckels 56 verschließbare und abdichtbare Zugangsöffnung 48 zum Austauschen der Knopfzelle 86. Der Deckel 56 ist mit einem Gewinde 58 versehen und ist in die Öffnung 48 einschraubbar. Hierzu weist der Deckel 56 auf seiner Außenfläche einen Schlitz 57 auf. Zum wasserdichten Verschließen der Öffnung 48 ist ferner eine Nut 59 unterhalb der Deckeloberfläche angeordnet, worin ein Dichtungsring eingesetzt wird. Weitere Positionierelemente 52, 54 sind an der Innenseite des hinteren Gehäuseabschnitts 42 zum Befestigen der Beleuchtungsvorrichtung 8 vorgesehen.

Die Beleuchtungsvorrichtung enthält zwei Leuchtdioden 80, eine Platine 84 mit einem Schalter 82 und zwei Knopfzellen 86 zur Stromversorgung. Die Leuchtdioden 80 sind im Wesentlichen im dritten Abschnitt 72 des Durchgangs 62 jeweils unmittelbar benachbart zum Ende des Bandes 2 angeordnet, wodurch eine effektive Lichteinleitung sichergestellt wird. Zur Versorgung mit Strom sind die Leuchtdioden über eine Platine 84 und zwei Kontaktkabeln 88 mit zwei Knopfzellen 86 verbunden. Die Kabel 88 sind an einer Kontaktplatte unterhalb der Knopfzellen 86 verbunden, um ein einfaches Austauschen der Knopfzellen zu ermöglichen.

Das Ausführungsbeispiel zeigt lediglich eine Kombinationsmöglichkeit der Merkmale. Es beschränkt den Gegenstand der Erfindung nicht auf die hier gezeigten beschriebene Kombination und Ausführung von Merkmalen.

## Patentansprüche

**1.** Leuchthalsband für Säugetiere, insbesondere Hunde, mit
- einem transparenten und flexiblen Band zum Anlegen um einen Halsbereich,
- einer Beleuchtungsvorrichtung zum Beleuchten des Bandes, enthaltend mindestens einen Leuchtkörper,
- einem Gehäuse mit zwei Verbindungsabschnitten zum Verbinden der Enden des Bandes mit dem Gehäuse,
**dadurch gekennzeichnet, dass** der Leuchtkörper so relativ zu einem Ende des Bandes angeordnet ist, dass das abgegebene Licht in das Band einleitbar ist.

**2.** Leuchthalsband nach Anspruch 1,
**dadurch gekennzeichnet, dass** der Leuchtkörper außerhalb des Bandes angeordnet ist.

**3.** Leuchthalsband nach Anspruch 1 oder 2,
**dadurch gekennzeichnet, dass** das Band Lichtstreuungsabschnitte aufweist.

**4.** Leuchthalsband nach einem der vorstehenden Ansprüche,
**dadurch gekennzeichnet, dass** die Lichtstreuungsabschnitte an einer inneren Oberfläche des Bandes und / oder innerhalb des Bandes angeordnet sind.

**5.** Leuchthalsband nach einem der vorstehenden Ansprüche,
**dadurch gekennzeichnet, dass** die Lichtstreuungssabschnitte in Form von Nuten ausgebildet sind.

**7.** Leuchthalsband nach einem der vorstehenden Ansprüche,
**dadurch gekennzeichnet, dass** das Band schlauchförmig ausgebildet und mit einer Nut versehen ist, die gewindeförmig, um das Band verläuft.

**8.** Leuchthalsband nach einem der vorstehenden Ansprüche,
**dadurch gekennzeichnet, dass** das Band aus einem transparenten Kern und Mantel zusammengesetzt ist, wobei der Brechungsindex des Kerns höher ist als der des Mantels.

**9.** Leuchthalsband für Säugetiere nach dem Oberbegriff des Anspruchs 1 oder einem der vorstehenden Ansprüche,
**dadurch gekennzeichnet, dass** die Längsachsen der Verbindungsabschnitte angewinkelt zueinander angeordnet sind.

**10.** Leuchthalsband nach einem der vorstehenden Ansprüche,
**dadurch gekennzeichnet, dass** die Längsachsen der Verbindungsabschnitte in einem Winkel von kleiner als 180°, vorzugsweise im Bereich von 70° bis 130° und besonders bevorzugt im Bereich von 90°±10° angeordnet sind.

**11.** Leuchthalsband für Säugetiere nach dem Oberbegriff des Anspruchs 1 oder einem der vorstehenden Ansprüche,
**dadurch gekennzeichnet, dass** das Gehäuse und jede Verbindung zwischen dem Verbindungsabschnitt und dem Band wasserdicht ausgebildet ist.

**12.** Leuchthalsband nach einem der vorstehenden Ansprüche,
**dadurch gekennzeichnet, dass** das Ende des Bandes innerhalb des Verbindungsabschnittes einspannbar ist.

**13.** Leuchthalsband nach einem der vorstehenden Ansprüche,
**dadurch gekennzeichnet, dass** die Verbindungsabschnitte einen Durchgang aufweisen, in welchen das Band eingefügt ist, wobei der Durchgang zumindest abschnittsweise verjüngt ausgebildet ist, um das Band im Bereich des verjüngten Abschnitts zu verspannen, und die Verbindungsabschnitte an ihrer Außenfläche ein Gewinde aufweisen, auf die jeweils eine Verschlusskappe zum zusätzlichen Verspannen des Bandes aufschraubbar ist.

**14.** Leuchthalsband nach einem der vorstehenden Ansprüche,
**dadurch gekennzeichnet, dass** der Durchgang einen Anschlag aufweist, der mit dem Ende des Bandes zusammenwirkt, um das Einfügen des Bandes zu begrenzen.

**15.** Leuchthalsband nach einem der vorstehenden Ansprüche,
**dadurch gekennzeichnet, dass** das Gehäuse mehrere Gehäuseabschnitte aufweist, die miteinander verklebt oder verschweißt, insbesondere ultraschallverschweißt, sind.

**16.** Leuchthalsband nach einem der vorstehenden Ansprüche,
**dadurch gekennzeichnet, dass** Gehäuse in einer Ansicht im wesentlichen Y-förmig gestaltet ist, die Verbindungsabschnitte winklig von einem Grundkörper des Gehäuses abstehen und der Grundkörper einen Hohlraum aufweist.

**17.** Leuchthalsband nach einem der vorstehenden Ansprüche,
**dadurch gekennzeichnet, dass** der Leuchtkörper und eine elektrische Stromversorgungseinrichtung zumindest teilweise innerhalb des Hohlraums des Grundkörpers angeordnet ist.

**18.** Leuchthalsband nach einem der vorstehenden Ansprüche,
**dadurch gekennzeichnet, dass** der Leuchtkörper aus einer Leuchtdiode ausgebildet ist, die im Wesentlichen im Durchgang des Verbindungsabschnitts angeordnet ist.

**19.** Leuchthalsband nach einem der vorstehenden Ansprüche,
**dadurch gekennzeichnet, dass** das Gehäuse im Bereich des Grundkörpers einen elastisch verformbaren Bereich aufweist.

**20.** Leuchthalsband nach einem der vorstehenden Ansprüche,
**dadurch gekennzeichnet, dass** das Gehäuse eine mittels eines Deckels verschließbare und abdichtbare Zugangsöffnung für die elektrische Stromversorgungseinrichtung aufweist.

**21.** Leuchthalsband nach einem der vorstehenden Ansprüche,
**dadurch gekennzeichnet, dass** das Band aus einem thermoplastischem Elastomer, insbesondere thermoplastisches Urethan, hergestellt ist.

**22.** Leuchtband nach einem der vorstehenden Ansprüche,
**dadurch gekennzeichnet, dass** das Gehäuse aus einem Material aus der Gruppe enthaltend Acrylnitril-Butadien-Styrole hergestellt ist.
